# EUROPEAN PATENT SPECIFICATION

(11) **EP 0 514 946 B1**
(45) Date of publication and mention of the grant of the patent: **18.08.1999**
(21) Application number: 92108782.1
(22) Date of filing: 25.05.1992
(51) Int. Cl.: B23K 35/28, B32B 15/01, B23K 35/02

(54) **An aluminum alloy composite material for brazing**
Verbundmaterial aus Aluminiumlegierungen zum Hartlöten
Matériau composite en alliages d'aluminium pour brasage

(30) Priority: 24.05.1991 JP 14948191; 07.05.1992 JP 14221892
(43) Date of publication of application: 25.11.1992
(73) Proprietor: KABUSHIKI KAISHA KOBE SEIKO SHO also known as Kobe Steel Ltd., Kobe 651 (JP); DENSO CORPORATION, Kariya-City Aichi-Pref. 448 (JP)
(72) Inventor: Fujimoto, Hideo, c/o Moka Plant, Kobe Steel Ltd., Moka-shi, Tochigi-ken, 321-43 (JP); Hirano, Masakazu, c/o Chofu Plant, Kobe Steel Ltd., Shimonoseki-shi, Yamaguchi-ken 752 (JP); Okamoto, Tadashi, c/o Moka Plant, Kobe Steel Ltd., Moka-shi, Tochigi-ken, 321-43 (JP); Hashiura, Mituo, Kariya-shi, Aichi-ken 446 (JP); Ohara, Takahide, Okazaki-shi, Aichi-ken 444 (JP)
(74) Representative: Bühling, Gerhard, Dipl.-Chem.

(56) References cited:
- GB-A- 2 073 246
- US-A- 4 560 625
- US-A- 4 649 087
- US-A- 5 011 547
- PATENT ABSTRACTS OF JAPAN vol. 14, no. 393 (M-1015) 24 August 1990 & JP-A-2 147 163 ( FURUKAWA ALUM CO ET AL ) 6 June 1990

## Description

The present invention relates to an aluminum alloy composite material for brazing, which is improved in strength, corrosion resistance and brazability, and which provides remarkable advantages when used for assembly process by brazing method with noncorrosive flux.

Aluminum alloy composite materials for brazing are used for a tube member of a brazed radiator, and the like, and conventionally, brazing sheets comprising an Al-Mn alloy (JIS A3003) core member and an Al-Si filler member clad on the core member are used for this purpose. The brazing sheet with the A3003 core member, however, has a post-brazing strength of not greater than 12 kgf/mm² or thereabouts and is not sufficiently resistant to corrosion.

If Mg is added to the aluminum alloy for the core member, the strength of the composite material can be improved, but this results in an increased erosion of the core member due to the filler member and also in a reduction of brazability and corrosion resistance. Particularly, in the case of employing brazing method with noncorrosive flux, the Mg content of the core member in excess of 0.2% entails a substantial drop of the brazability, and accordingly, the addition of Mg to the core member of the aluminum alloy must be restricted.

There has been also presented in JP-A-2175093 (corresponding to US-A-5011547) an aluminum alloy composite material for brazing improved in post-brazing strength without inhibiting brazability. This composite material has a total thickness of 0.4 mm or thereabouts and comprises a core member made of an aluminum alloy which may contain 0.2-1.5 wt.% Mn, 0.3-1.3 wt.% Si and at most 0.2 wt.% Mg and optionally Cu, Cr and Zr, the balance being Al; an Al-Si filler member clad on one surface of the core member; and a cladding member of an aluminum alloy clad on the opposite side of the core member comprising 0.3-2.5 wt.% Mg and optionally Mn, Cu, Cr and Zr.

The US-A-4560625 discloses an aluminum alloy composite material for brazed heat exchangers, the material comprising a core member essentially consisting of one element selected from the group consisting of Mn, Cr and Zr in an amount of 0.05-0.5 wt.%, 0.2-1.0 wt.% Si, 0.1-0.5 wt.% Mg, and 0.2-1.0 wt.% Cu, the balance being Al and inevitable impurities; an Al-Si-filler and a cladding layer.

Furthermore, US-A-4649087 discloses an aluminum core alloy for use in the manufacture of brazed heat exchanger assemblies having high resistance to corrosion and moderate strength. The aluminum core alloy comprises 0.11-0.3 wt.% Ti, 0.3-1.5 wt.% Mn, 0.005-0.7 wt.% Cu, up to 0.7 wt.% Fe, up to 0.8 wt.% Si, up to 1.5 wt.% Mg, the balance being aluminum and inevitable impurities.

Thus, with conventional techniques, it is difficult to obtain a tube member of a brazed radiator which has high strength and high corrosion resistance and yet is excellent in brazability. As for heat exchanger such as an automobile radiator, thin materials are needed to reduce the weight and cost, and accordingly, there is a demand for an aluminum alloy composite material for brazing which has high strength and high corrosion resistance and is excellent in brazability, but no such material has been developed yet.

It is an object of the present invention to provide an aluminum alloy composite material for brazing which provides high strength, high corrosion resistance and excellent brazability, without being lowered by brazing process without noncorrosive flux, and is suited for the member used for assembling a high-strength heat exchanger.

To achieve the above object, the inventors hereof made studies on members for brazing which have a smaller amount of Mg contained in the aluminum alloy for the core member but have high strength while brazability and corrosion resistance are still more improved. As a result, the present invention is accomplished as follows.

The present invention provides an aluminum alloy composite material for brazing comprising (in wt.-%):
a core member (1) made of an aluminum alloy consisting of 0.2 - 1.5 % Mn, 0.3 - 1.3 % Si, 0.02 - 0.3 % Ti, less than 0.1 % Mg,
   optionally 0.1 % or less Cu, 0.3 % or less Cr, 0.2 % or less Zr, the balance being Al and inevitable impurities;
an Al-Si filler member (3) clad on one surface of said core member; and
a cladding member (2) of an aluminum alloy clad on the opposite side of said core member, comprising 0.3 - 3 % Mg, and optionally 5 % or less Zn;
the composite material having total thickness of less than or equal to 0.3 mm.

Furthermore, the present invention also provides a tube member for a radiator in which the aforementioned aluminum alloy composite material for brasing is welded into a tube with said filler member outside, and said tube is fabricated into a radiator by brazing method with noncorrosive flux, wherein after brazing, said core member has a pitting potential (positive) higher than a pitting potential of said cladding member and higher than a pitting potential of said filler member, and the differences in pitting potential between said core member and said cladding member and between said core member and said filler member fall in the range of from 30 - 120 mV.

The present invention thus provides a high-strength aluminum alloy composite material which is not lowered in brazability or corrosion resistance by Nocolok brazing method. Accordingly, when the high-strength aluminum alloy composite material of the present invention is used for assembling a heat exchanger of an automobile, it provides remarkable effects such as a reduction in thickness and weight of the heat exchanger, reduction in the cost, and the like

Fig.1 is a view showing a structure of an example of an aluminum alloy composite material for brazing, according to the present invention; and

Fig.2 is a view showing a structure of an application example of an aluminum alloy composite material for brazing, according to the present invention.

The present invention will be hereinafter described in detail.

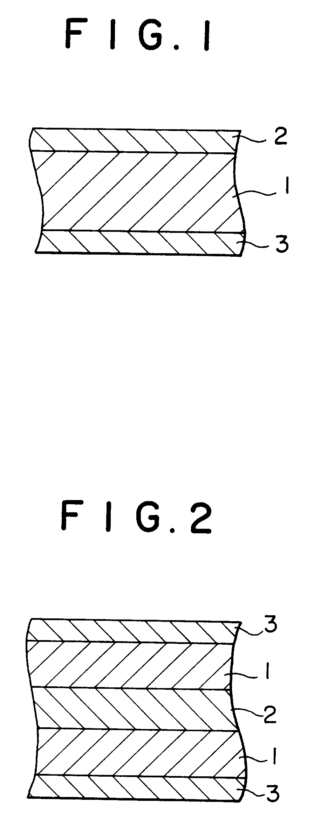

The structure of an aluminum alloy composite material for brazing according to the present invention is such that, as shown in Fig.1, a core member 1, made of an aluminum alloy, the content of Mg being restricted to 0.1 wt.% or less and inevitable impurities, consisting essentially of 0.2 to 1.5 wt.% of Mn, 0.3 to 1.3 wt.% of Si, 0.02 to 0.3 wt.% of Ti, and containing further as required, 0.1 wt.% or less of Cu, 0.3 wt.% or less of Cr and 0.2 wt.% or less of Zr, contacts an Al-Si filler member 3; and a cladding member 2 of aluminum alloy consisting essentially of a predetermined amount of ( 0.3 to 3 wt.%) of Mg is clad on the opposite surface of the core member 1.

The aluminum alloy composite material with the above structure has the following characteristics and thus achieves the intended effects.

In brazing, the brazability of the composite material is never lowered since the Mg content of the core member 1 is restricted to a low value. Further, during brazing with heat, Si in the filler member 3 is diffused into the core member 1, while Mg is diffused into the core member 1 from the cladding member 2 on the opposite side of the core member 1, whereby MgSi compound is produced in the core member 1, thus increasing the post-brazing strength. In this case, the region of the core member 1 contacting the filler member 3 has the lowest Mg content since the Mg is supplied to the core member 1 from the cladding member 2 clad on the core member 1 on the opposite side of the filler member 3 and diffuses in the core member 1 to said region, whereby the strength can be improved without a reduction in the brazability. On the other hand, the surface of the cladding member 2 at the opposite side has the highest Mg content and the lowest Si content, and accordingly, the corrosion resistance is hardly lowered.

According to the aluminum alloy composite material proposed in Japanese Published Unexamined Patent Application No.175093/1990 which is a prior art related to the present invention, Ti content of the composition for the core member was not regulated, so that the corrosion resistance was found out to be insufficient.

Meanwhile, the core member of the present invention is added as essential components with Mn, Si and Ti, and this is because these alloy elements are indispensable for improving the strength and corrosion resistance (or inhibition of intergranular corrosion sensitivity) of core member. As required the strength as well as outside corrosion resistance can be further increased by adding Cu, while suitable amounts of Cr, Zr and the like regulate crystalline grain shape of the core member, thus improving the brazability. The addition of Mg within a regulated range also works as an inhibitor for reduction in brazability and contributes to improve the strength.

For the cladding member 2 clad on the opposite side of the core member 1, an Aluminum alloy containing Mg is used, which can function as a sacrificial anode when used for the radiator tube, thereby remarkably increasing corrosion resistance. By adding a suitable amount of Zn to the cladding member 2, the function of the sacrificial anode can further be improved.

Thus, during brazing, the core member 1 serves to restrain the diffusion of Si from the filler member 3 clad on one surface of the core member 1 and the diffusion of Mg from the cladding member 2 clad on the opposite surface of the core member 1. The thickness of the core member 1 will be optimum when the aforementioned effect can be obtained simultaneously with the strength being improved to its maximum.

The aluminum alloy composite material according to the invention has the above-mentioned effects. Now, the definition of the contents of the individual elements will be described.

### Core Member:

In the aluminum alloy for a core member, the allowable amount of Mg contained in aluminum alloy core member 1 as impurity before brazing is defined as 0.1 wt.% at the maximum, to avoid the brazability being lowered. If the Mg content is greater than the allowable value, the brazability is unfavorably lowered especially during a brazing process by a Nocolok brazing method. The Mg content is thus less than 0.1wt.%.

By adding Mn to the core member 1, the corrosion resistance, brasability and strength can be improved. The adding amount of Mn for this purpose is to fall within a range of 0.2 to 1.5 wt.%. If the addition of Mn is less than 0.2 wt.%, the above advantages are not fully achieved, whereas the Mn content is greater than 1.5 wt.%, large compounds are produced and thus the workability is lowered.

Similarly, by adding Si to the core member 1, it is possible to improve the strength even if the supply of Si from the filler member 3 is insufficient. A preferable amount of Si to be added is 0.3 wt.% to 1.3 wt.%. If the amount of Si is smaller than 0.3 wt.%, the strength is not sufficiently improved, and if the amount of Si is greater than 1.3 wt.%, a disadvantage arises because the melting point is lowered.

Moreover, addition of Ti to the core member 1 can further improve the corrosion resistance. A preferable content of Ti to be added is 0.02 to 0.3 wt.%. If the content of Ti is less than 0.02 wt.%, the improvement of the corrosion resistance can not be achieved, and if the content of Ti exceeds 0.3 wt.%, the effect will reach saturation, and production of large compounds arises, thus disadvantageously resulting in low workability. As mentioned above, the Ti is indispensable for improving the corrosion resistance. This mechanism is performed such that Ti precipitates to form Ti-rich layers in the core member 1 in a rolling direction, thereby to inhibit a pitting corrosion from propagating toward the depth, and Ti makes the electrical potential of the core member 1 change toward positive. Since Ti diffuses at a slow speed in an aluminum alloy and moves not so far during brazing, the potential difference between the core member 1 and the filler member 3, or between the core member 1 and the cladding member 2 can be maintained, and thus the core member 1 can be effectively electrochemically protected from the corrosion.

Furthermore, adding Cu, as required, to the core member 1 makes the potential of the core member 1 transfer toward positive, and thus electrochemically protecting the core member 1 from the corrosion. For this reason, the addition of Cu causes a great effect for improving the corrosion resistance and the strength. The amount of Cu is 0.1 wt.% or less. In this case, if the content of Cu is 0.1wt.% or less, it is advantageous for inhibiting the sensitivity of the intergranular corrosion. If the amount of Cu exceeds 0.6 wt.%, although the strength is improved, the corrosion resistance is greatly lowered. As a result, it is impossible to ensure a sufficient corrosion resistance even though the function of the cladding member 2 as a sacrificial anode is enhanced, and thus brazability is lowered.

Similarly, adding at least one element selected form Cr and Zr to the core member 1 makes it possible to improve the corrosion resistance, strength and brazability. Preferable amounts of Cr and Zr are 0.3 wt.% or less and 0.2 wt.%, respectively. Addition of the elements in excess of their respective upper limits leads to saturation of the aforementioned effects and decreases in workability.

The core member 1 serves to restrict not only the diffusion of Si from the filler member 3 but the diffusion of Mg from the cladding member 2 during brazing. The thickness of the core member 1 is set to an optimum value such that the above-mentioned effects are achieved and the strength is the maximum, and preferably is 2.5 times or more the thickness of the filler member 3 and in the range of 0.1 to 1 mm.

### Cladding member:

For the cladding member 2 clad on the surface of the core member 1 at the opposite side of the filler member 3, an aluminum alloy containing Mg is used, which can act as a sacrificial anode when the composite material is used for a radiator tube and the like, thereby remarkably increasing the corrosion resistance. The Mg content at the interface between the core member 1 and the filler member 3 after brazing is preferably about 0.1 wt.% to 0.2 wt.%, and to obtain such Mg content, the Mg content of the cladding member 2 should be in the range of 0.3 wt.% to 3.0 wt.%, though the content depends on the thickness of the cladding member 2, the brazing conditions, and the like. If the Mg content is less than 0.3 wt.%, the improvement in strength is insufficient, and if the Mg content is greater than 3.0 wt.% then it is difficult to have the cladding member 2 clad on the core member 1. If a composite material with an increased thickness is to be manufactured, Mn, Cu, Cr, Ti, Zr, and the like may be added to the cladding member 2 to improve the strength. The preferable amounts of these elements to be added are the same as in the case of adding the elements to the alloy of the core member 1.

When the cladding member 2 is to be used as a sacrificial anode, it is effective to add elements for transferring the potential toward positive, e.g., Mn, Cu, Ti, Cr, and the like, to the core member 1; in addition, to increase anode potential of the cladding member 2, Zn may be added to the cladding member 2. Preferably, the amount of Zn to be added is 5 wt.% or less, and if the cladding member 2 contains more Zn, a disadvantage can be caused in that the furnace is contaminated during brazing.

### Filler Member:

For a filler member 3, Al-Si alloys such as, for instance, A4045 alloy and the like can be used as in the conventional art. It is also possible to add Zn to the filler member 3 in order to function the filler member 3 as a sacrificial anode. Preferable amount of Zn to be added to the filler member 3 is the same as in the case of adding the elements to the alloy of the cladding member 2.

### Other Conditions:

As for the thickness of the composite material, 0.3 mm or less is enough when the material is used for a tube member of a radiator, because the strength is sufficiently increased by the diffusion of Mg from the cladding member 2 clad on the side of the core member 1 which is opposite to the filler member 3.

The present invention is the most effective when applied to the brazing method with noncorrosive flux which can extremely degrade the brazability due to Mg, but of course, it can be applied to other brazing methods such as atmosphere brazing, flux brazing, vacuum-brazing, and the like. If, as shown in Fig.2, aluminum alloy core members 1 containing no Mg are clad on both surfaces of an aluminum alloy cladding member 2 containing Mg and Al-Si filler members 3 are clad on both surfaces of the resultant structure, then a brazing sheet with filler members 3 on both surfaces thereof can be obtained.

In assembling a radiator tube, the composite material is worked into a tube by a suitable process, e.g., by seam welding, with the aforesaid filler member 3 outside.

For the improvement in the corrosion resistance of the inner surface of the radiator tube, the most effective measure is to use the cladding member 2 as a sacrificial anode for the core member 1. Since the brazing method with noncorrosive flux is carried out under atmospheric pressure, Zn scarcely vaporizes but is diffused into the core member 1 by the brazing heat, thus deceasing the surface concentration. To greatly improve the corrosion resistance of the inner surface (coolant-side surface) of the radiator tube by the sacrificial anode effect of the cladding member 2, the difference of pitting potentials between the surface of the cladding member 2 and the core member 1 need be not smaller than 30 mV. However, if the difference of the pitting potentials is greater than 120 mV, the speed of consumption of the cladding member 2 is large and thus the sacrificial anode effect cannot be maintained for a long period of time. The difference of the pitting potentials between the cladding member 2 and the core member 1 varies depending on the composition of the cladding member 2 and core member 1 and the brazing conditions, but if the pitting potential difference after the brazing with noncorrosive flux is within the range of 30 to 120 mV, excellent corrosion resistance can be enjoyed for a long time. Similarly, if the pitting potential difference between the surface of the filler member 3 and the core member 1 falls within the range of 30 to 120 mV, it is possible to ensure excellent corrosion resistance for a long period of time.

Embodiments of the present invention will now be described.

### (Embodiment 1)

For examples 1 to 5 hereinafter, aluminum alloys (core member, cladding member and filler member) having the chemical compositions shown in Table 1 were prepared. In Table 1, No.1 to No.12 alloys were used for the core member, No.13 to No.19 alloys for the cladding member clad on the opposite side of the core member, and No.20 alloy (4045 alloy) for the filler member.

Here, No.7 to No.12 alloys are used as comparative examples, and No.7 alloy contained a large amount of Ti, and No.8 alloy contained little amount of Si and Ti. No.9, No.10, No.11 and No.12 alloys contained Mn, Si, Mg and Cu in a large amount respectively.

These aluminum alloys were combined as shown in Table 2, to produce samples of aluminum alloy composite materials for brazing having the structure shown in Fig.1.

### Example 1-1:

Each of the aluminum alloy composite material for brazing having a respective combination shown in Table.2 was applied with 5g/m² brazing flux of noncorrosive on the filler member thereof, dried and then heated at 600 °C for 5 minutes in a nitrogen gas atmosphere having a dew point of -40 °C. The evaluation results on brazing for each are shown in Table.3. Here, the brazability of the samples was evaluated in terms of flow factor. As is apparent from Table.3, the examples according to the present invention had improved brazability.

### Example 1-2:

The aluminum alloy composite materials heated under the same conditions as in Example 1 were left to stand for 7 days in room temperature, and then subjected to a tensile test. As seen from Table 3 showing the results, the examples according to the present invention had high strength after brazing over 15 kgf/mm²(145N/mm²)

### Example 1-3:

The aluminum alloy composite materials heated under the same conditions as in Example 1-1 were subjected to a CASS test to evaluate the corrosion resistance of the filler member side of the composite material. The evaluation results after the CASS test for 250 hours are shown in Table 3. As indicated in Table.3 under the caption "Corrosion depth of Filler Member Side (mm)", the examples according to the invention had excellent corrosion resistance.

### Example 1-4:

The aluminum alloy composite materials heated under the same conditions as in Example 1-1 were subjected to an immersion test by immersing the composite materials in artificial water (Cl⁻: 300ppm; SO⁻²: 100ppm; Cu⁺: 5ppm) for 30 days under alternate temperature conditions of 88°C for 8 hours and room temperature for 16 hours, to evaluate the corrosion resistance of the cladding member clad on the core member. The results of the immersion test are shown in Table.3. As indicated in Table.3 under the caption "Corrosion depth of Cladding Member Side (mm)", the examples according to the invention had excellent corrosion resistance.

### Example 1-5:

For each of the aluminum alloy composite materials heated under the same conditions as in Example 1-1, the pitting potential of the surface of the cladding member clad on the core member, the pitting potential of the surface of the filler member and the pitting potential of the core member which was exposed by mechanically removing the cladding member with emery grinding paper were measured under the following conditions.

### 〈Measuring Conditions:〉

- Electrolyte:: 3.5% NaCl, (deaeration)
- Temperature:: 25 °C
- Measuring Method:: Potential scanning by using a potentiostat (sweep speed: 10 mV/min)

The measured differences of pitting potentials between the core member and the cladding member are shown in Table.3. As shown in Table.3, the differences of pitting potentials between the core member and cladding member and between the core member and the filler member, of the aluminum alloy composite materials for brazing according to the present invention fall within the range of 30 to 120 mV, and this means that excellent corrosion resistance can be maintained for a long period of time.

### (Embodiment 2)

For examples 2-1 to 2-5 hereinafter, aluminum alloys (core member, cladding member and filler member) having the chemical compositions shown in Table.4 were prepared. In Table 4, No.1 to No.12 alloys were used for the core member, No.13 to No.19 alloys for the cladding member, and No.20 alloy (4045 alloy) for the filler member.

Here, No.7 to No.12 alloys are used as comparative examples, and No. 7 alloy contained a large amount of Ti, and No.8 alloy contained little amount of Si and Ti. No.9, No.10, No.11 and No.12 alloys contained Mn, Si, Mg and Cu in a large amount, respectively.

These aluminum alloys were combined as shown in Table 5, to produce samples of aluminum alloy composite materials for brazing having the structure shown in Fig.1.

### Example 2-1:

Each of the aluminum alloy composite material for brazing having a respective combination shown in Table.5 was applied with 5g/m² Nocolok brazing flux on the filler member thereof, dried and then heated at 600°C for 5 minutes in a nitrogen gas atmosphere having a dew point of -40°C. The evaluation results on brazing for each are shown in Table.6. Here, the brazability of the samples was evaluated in terms of flow factor. As is apparent from Table.6, the examples according to the present invention had improved brazability.

### Example 2-2:

The aluminum alloy composite materials heated under the same conditions as in Example 2-1 were left to stand for 7 days in room temperature, and then subjected to a tensile test. As seen from Table.6 showing the results, the examples according to the present invention had high strength after brasing over 15 kgf/mm² (145 N/mm²).

### Example 2-3:

The aluminum alloy composite materials heated under the same conditions as in Example 2-1 were subjected to a CASS test to evaluate the corrosion resistance of the filler member side of the composite material. The evaluation results 250 hours after the CASS test are shown in Table 6. As indicated in Table.6 under the caption "Corrosion depth of Filler Member Side (mm)", the examples according to the present invention had excellent corrosion resistance.

### Example 2-4:

The aluminum alloy composite materials heated under the same conditions as in Example 2-1 were subjected to an immersion test by immersing the composite materials in artificial water (Cl⁻: 300ppm; SO⁻²: 100ppm; Cu⁺: 5ppm) for 30 days under alternate temperature conditions of 88°C for 8 hours and room temperature for 16 hours, to evaluate the corrosion resistance of the cladding member clad on the core member. The results of the immersion test are shown in Table.6. As indicated in Table.6 under the caption "Corrosion depth of Cladding Member Side (mm)", the examples according to the present invention had excellent corrosion resistance.

### Example 2-5:

For each of the aluminum alloy composite materials heated under the same conditions as in Example 2-1, the pitting potential of the surface of the cladding member, the pitting potential of the surface of the filler member and the pitting potential of the core member which was exposed by mechanically removing the cladding member with emery grinding paper were measured under the same conditions as in Example 1-5 of Embodiment 1.

The measured differences of pitting potentials between the core member and the cladding member are shown in Table.6. As shown in Table.6, the differences of pitting potentials between the core member and cladding member and between the core member and the filler member, of the aluminum alloy composite materials for brazing according to the present invention fall within the range of 30 to 120 mV, and this means that excellent corrosion resistance can be maintained for a long period of time.

As is apparent from Embodiments 2-1 and 2-2, each of the examples of the present invention can provide high strength without a reduction in brazability or corrosion resistance.

**Table 1**

| Chemical Composition of Aluminum Alloy used in Aluminum Alloy Composite Material for Brazing | | | | | | | | | | |
|---|---|---|---|---|---|---|---|---|---|---|
| Alloy No. | Chemical Composition (wt.%) | | | | | | | | | |
| | Si | Cu | Mn | Mg | Zn | Cr | Zr | Ti | Al | |
| 1 | 0.8 | 0.0 | 1.2 | 0.00 | 0.0 | 0.10 | 0.05 | 0.10 | bal | Core Member Example |
| 2 | 0.8 | 0.0 | 1.5 | 0.00 | 0.0 | 0.05 | 0.00 | 0.15 | bal | Ditto |
| 3 | 1.2 | 0.0 | 1.0 | 0.00 | 0.0 | 0.10 | 0.05 | 0.10 | bal | Ditto |
| 4 | 0.8 | 0.0 | 1.0 | 0.10 | 0.0 | 0.00 | 0.15 | 0.15 | bal | Ditto |
| 5 | 0.8 | 0.1 | 0.4 | 0.00 | 0.0 | 0.10 | 0.05 | 0.05 | bal | Ditto |
| 6 | 0.8 | 0.0 | 1.0 | 0.00 | 0.0 | 0.00 | 0.00 | 0.15 | bal | Ditto |
| 7 | 0.8 | 0.0 | 1.0 | 0.00 | 0.0 | 0.10 | 0.05 | 0.35 | bal | Core Member Comparative Example |
| 8 | 0.2 | 0.1 | 1.0 | 0.00 | 0.0 | 0.10 | 0.05 | 0.01 | bal | Ditto |
| 9 | 0.8 | 0.2 | 1.6 | 0.00 | 0.0 | 0.10 | 0.05 | 0.10 | bal | Ditto |
| 10 | 1.4 | 0.0 | 0.2 | 0.00 | 0.0 | 0.10 | 0.05 | 0.10 | bal | Ditto |
| 11 | 0.8 | 0.1 | 1.0 | 0.25 | 0.0 | 0.10 | 0.05 | 0.05 | bal | Ditto |
| 12 | 0.8 | 0.7 | 1.0 | 0.00 | 0.0 | 0.10 | 0.05 | 0.15 | bal | Ditto |
| 13 | - | - | - | 1.0 | 4.5 | - | - | - | bal | Cladding Member Example |
| 14 | - | - | - | 2.0 | 2.0 | - | - | - | bal | Ditto |
| 15 | - | - | - | 3.0 | 0.0 | - | - | - | bal | Ditto |
| 16 | - | - | - | 0.5 | 1.5 | - | - | - | bal | Ditto |
| 17 | - | - | - | 1.0 | 2.0 | - | - | - | bal | Ditto |
| 18 | - | - | - | 0.0 | 1.5 | - | - | - | bal | Cladding Member Comparative Example |
| 19 | - | - | - | 4.0 | 1.0 | - | - | - | bal | Ditto |
| 20 | 10.5 | 0.0 | 1.0 | 0.0 | 0.0 | 0.10 | 0.05 | 0.10 | bal | Filler Member :4045 |
| bal: balance | | | | | | | | | | |

**Table 2**

| Structure of Aluminum Alloy Composite Material for Brazing | | | | | | | | |
|---|---|---|---|---|---|---|---|---|
| Test No. | Core Member | | Cladding Member | | Filler Member | | Total Thickness of sheet | Reference (mm) |
| | No. | Thickness (mm) | No. | Thickness (mm) | No. | Thickness (mm) | | |
| 1 | 1 | 0.24 | 14 | 0.03 | 20 | 0.03 | 0.30 | Example |
| 2 | 2 | 0.24 | 14 | 0.03 | 20 | 0.03 | 0.30 | Ditto |
| 3 | 3 | 0.24 | 14 | 0.03 | 20 | 0.03 | 0.30 | Ditto |
| 4 | 4 | 0.24 | 14 | 0.03 | 20 | 0.03 | 0.30 | Ditto |
| 5 | 5 | 0.24 | 14 | 0.03 | 20 | 0.03 | 0.30 | Ditto |
| 6 | 6 | 0.24 | 14 | 0.03 | 20 | 0.03 | 0.30 | Ditto |
| 7 | 7 | 0.24 | 14 | 0.03 | 20 | 0.03 | 0.30 | Comparative Example |
| 8 | 8 | 0.24 | 14 | 0.03 | 20 | 0.03 | 0.30 | Ditto |
| 9 | 9 | 0.24 | 14 | 0.03 | 20 | 0.03 | 0.30 | Ditto |
| 10 | 10 | 0.24 | 14 | 0.03 | 20 | 0.03 | 0.30 | Ditto |
| 11 | 11 | 0.24 | 14 | 0.03 | 20 | 0.03 | 0.30 | Ditto |
| 12 | 12 | 0.24 | 14 | 0.03 | 20 | 0.03 | 0.30 | Ditto |
| 13 | 1 | 0.24 | 13 | 0.03 | 20 | 0.03 | 0.30 | Example |
| 14 | 1 | 0.24 | 15 | 0.03 | 20 | 0.03 | 0.30 | Ditto |
| 15 | 1 | 0.24 | 16 | 0.03 | 20 | 0.03 | 0.30 | Ditto |
| 16 | 1 | 0.24 | 17 | 0.03 | 20 | 0.03 | 0.30 | Ditto |
| 17 | 1 | 0.24 | 18 | 0.03 | 20 | 0.03 | 0.30 | Comparative Example |
| 18 | 1 | 0.24 | 19 | 0.03 | 20 | 0.03 | 0.30 | Ditto |
| 19 | 1 | 0.05 | 14 | 0.22 | 20 | 0.01 | 0.30 | Ditto |
| 20 | 1 | 0.08 | 14 | 0.01 | 20 | 0.15 | 0.10 | Ditto |
| 21 | 1 | 1.2 | 14 | 0.15 | 20 | 0.02 | 1.5 | Comparative Example |
| 22 | 1 | 0.16 | 14 | 0.02 | 20 | 0.02 | 0.20 | Example |
| 23 | 1 | 0.32 | 14 | 0.04 | 20 | 0.04 | 0.40 | Comparative Example |
| Note: The No. in the columns for core member, cladding member and filler member indicate the alloy No. in Table. 1. | | | | | | | | |

**Table 3**

| Testing Result of Evaluation on Aluminum Alloy Composite Materials | | | | | | |
|---|---|---|---|---|---|---|
| Test No. | Brazability (Flow Factor) (%) | Tensile Strength (N/mm² ) | Corrosion of Filler Member Side Corrosion Depth(mm) | Corrosion of Cladding Member Side Corrosion Depth(mm) | Cladding Member/Core Member Potential Difference (mV vs sec) | |
| 1 | 70 | 165 | 0.08 | 0.03 | 70 | Example |
| 2 | 70 | 165 | 0.08 | 0.03 | 70 | Ditto |
| 3 | 70 | 175 | 0.15 | 0.03 | 70 | Ditto |
| 4 | 60 | 160 | 0.10 | 0.03 | 70 | Ditto |
| 5 | 70 | 170 | 0.15 | 0.03 | 80 | Ditto |
| 6 | 70 | 160 | 0.08 | 0.03 | 70 | Ditto |
| 7 | 70 | 165 | Through hole | 0.20 | 70 | Comparative Example |
| 8 | 65 | 110 | 0.10 | 0.03 | 70 | Ditto |
| 9 | 60 | 175 | Through hole | 0.20 | 80 | Ditto |
| 10 | No evaluation can be made due to the melt of core member during brazing | | | | | Ditto |
| 11 | 35 | 180 | Through hole | 0.20 | 20 | Ditto |
| 12 | 60 | 210 | 0.05 | Through hole | 110 | Ditto |
| 13 | 70 | 150 | 0.08 | 0.05 | 110 | Example |
| 14 | 70 | 180 | 0.08 | 0.10 | 30 | Ditto |
| 15 | 70 | 140 | 0.08 | 0.06 | 60 | Ditto |
| 16 | 70 | 150 | 0.08 | 0.05 | 80 | Ditto |
| 17 | 70 | 130 | 0.10 | 0.05 | 70 | Comparative Example |
| 18 | No evaluation can be made due to the failure of cladding | | | | | Ditto |
| 19 | 40 | 180 | Through hole | Through hole | Unmeasurable | Ditto |
| 20 | 50 | 180 | Through hole | Through hole | Unmeasurable | Ditto |
| 21 | 80 | 140 | 0.20 | 0.10 | 130 | Ditto |
| 22 | 60 | 185 | 0.08 | 0.03 | 60 | Example |
| 23 | 75 | 155 | 0.10 | 0.04 | 90 | Ditto |

**Table 4**

| Chemical Composition of Aluminum Alloy used in Aluminum Alloy Composite Material for Brazing | | | | | | | | | | |
|---|---|---|---|---|---|---|---|---|---|---|
| Alloy No. | Chemical Composition (wt.%) | | | | | | | | | |
| | Si | Cu | Mn | Mg | Zn | Cr | Zr | Ti | Al | |
| 1 | 0.3 | 0.4 | 0.6 | 0.05 | 0.0 | 0.25 | 0.05 | 0.10 | bal | Core Member |
| | | | | | | | | | | Example |
| 2 | 0.8 | 0.3 | 1.5 | 0.00 | 0.0 | 0.05 | 0.00 | 0.15 | bal | Ditto |
| 3 | 0.8 | 0.5 | 1.0 | 0.00 | 0.0 | 0.10 | 0.05 | 0.10 | bal | Ditto |
| 4 | 1.2 | 0.5 | 1.0 | 0.20 | 0.0 | 0.00 | 0.15 | 0.15 | bal | Ditto |
| 5 | 0.8 | 0.6 | 0.4 | 0.00 | 0.0 | 0.10 | 0.05 | 0.05 | bal | Ditto |
| 6 | 0.8 | 0.5 | 1.0 | 0.00 | 0.0 | 0.00 | 0.00 | 0.15 | bal | Ditto |
| 7 | 0.8 | 0.5 | 1.0 | 0.00 | 0.0 | 0.10 | 0.05 | 0.35 | bal | Core Member Comparative Example |
| 8 | 0.2 | 0.1 | 1.0 | 0.00 | 0.0 | 0.10 | 0.05 | 0.01 | bal | Ditto |
| 9 | 0.8 | 0.2 | 1.6 | 0.00 | 0.0 | 0.10 | 0.05 | 0.10 | bal | Ditto |
| 10 | 1.4 | 0.0 | 0.2 | 0.00 | 0.0 | 0.10 | 0.05 | 0.10 | bal | Ditto |
| 11 | 0.8 | 0.1 | 1.0 | 0.25 | 0.0 | 0.10 | 0.05 | 0.05 | bal | Ditto |
| 12 | 0.8 | 0.7 | 1.0 | 0.00 | 0.0 | 0.10 | 0.05 | 0.15 | bal | Ditto |
| 13 | - | - | - | 1.0 | 4.5 | - | - | - | bal | Cladding Member Example |
| 14 | - | - | - | 2.0 | 2.0 | - | - | - | bal | Ditto |
| 15 | - | - | - | 3.0 | 0.0 | - | - | - | bal | Ditto |
| 16 | - | - | - | 0.5 | 1.5 | - | - | - | bal | Ditto |
| 17 | - | - | - | 1.0 | 2.0 | - | - | - | bal | Ditto |
| 18 | - | - | - | 0.0 | 1.5 | - | - | - | bal | Cladding Member Comparative Example |
| 19 | - | - | - | 4.0 | 1.0 | - | - | - | bal | Ditto |
| 20 | 10.5 | 0.0 | 1.0 | 0.0 | 0.0 | 0.10 | 0.05 | 0.10 | bal | Filler Member :4045 |
| bal: balance | | | | | | | | | | |

**Table 5**

| Structure of Aluminum Alloy Composite Material for Brazing | | | | | | | | |
|---|---|---|---|---|---|---|---|---|
| Test No. | Core Member | | Cladding Member | | Filler Member | | Total Thickness of sheet (mm) | Reference |
| | No. | Thickness (mm) | No. | Thickness (mm) | No. | Thickness (mm) | | |
| 1 | 1 | 0.24 | 14 | 0.03 | 20 | 0.03 | 0.30 | Example |
| 2 | 2 | 0.24 | 14 | 0.03 | 20 | 0.03 | 0.30 | Ditto |
| 3 | 3 | 0.24 | 14 | 0.03 | 20 | 0.03 | 0.30 | Ditto |
| 4 | 4 | 0.24 | 14 | 0.03 | 20 | 0.03 | 0.30 | Ditto |
| 5 | 5 | 0.24 | 14 | 0.03 | 20 | 0.03 | 0.30 | Ditto |
| 6 | 6 | 0.24 | 14 | 0.03 | 20 | 0.03 | 0.30 | Ditto |
| 7 | 7 | 0.24 | 14 | 0.03 | 20 | 0.03 | 0.30 | Comparative Example |
| 8 | 8 | 0.24 | 14 | 0.03 | 20 | 0.03 | 0.30 | Ditto |
| 9 | 9 | 0.24 | 14 | 0.03 | 20 | 0.03 | 0.30 | Ditto |
| 10 | 10 | 0.24 | 14 | 0.03 | 20 | 0.03 | 0.30 | Ditto |
| 11 | 11 | 0.24 | 14 | 0.03 | 20 | 0.03 | 0.30 | Ditto |
| 12 | 12 | 0.24 | 14 | 0.03 | 20 | 0.03 | 0.30 | Ditto |
| 13 | 3 | 0.24 | 13 | 0.03 | 20 | 0.03 | 0.30 | Example |
| 14 | 3 | 0.24 | 15 | 0.03 | 20 | 0.03 | 0.30 | Ditto |
| 15 | 3 | 0.24 | 16 | 0.03 | 20 | 0.03 | 0.30 | Ditto |
| 16 | 3 | 0.24 | 17 | 0.03 | 20 | 0.03 | 0.30 | Ditto |
| 17 | 3 | 0.24 | 18 | 0.03 | 20 | 0.03 | 0.30 | Comparative Example |
| 18 | 3 | 0.24 | 19 | 0.03 | 20 | 0.03 | 0.30 | Ditto |
| 19 | 3 | 0.05 | 14 | 0.22 | 20 | 0.03 | 0.30 | Ditto |
| 20 | 3 | 0.08 | 14 | 0.01 | 20 | 0.01 | 0.10 | Ditto |
| 21 | 3 | 1.2 | 14 | 0.15 | 20 | 0.15 | 1.5 | Comparative Example |
| 22 | 3 | 0.16 | 14 | 0.02 | 20 | 0.02 | 0.20 | Example |
| 23 | 3 | 0.32 | 14 | 0.04 | 20 | 0.04 | 0.40 | Comparative Example |
| Note: The No. in the columns for core member, cladding member and filler member indicates the alloy No. in Table. 4. | | | | | | | | |

**OR=L Table 6**

| Testing Result of Evaluation on Aluminum Alloy Composite Materials | | | | | | |
|---|---|---|---|---|---|---|
| Test No. | Brazability (Flow Factor) (%) | Tensile Strength (N/mm² ) | Corrosion of Filler Member Side Corrosion Depth(mm) | Corrosion of Cladding Member Side Corrosion Depth(mm) | Cladding Member/Core Member Potential Difference (mV vs sec) | |
| 1 | 65 | 165 | 0.06 | 0.10 | 80 | Example |
| 2 | 65 | 195 | 0.06 | 0.15 | 70 | Ditto |
| 3 | 70 | 210 | 0.10 | 0.15 | 70 | Ditto |
| 4 | 55 | 230 | 0.08 | 0.15 | 80 | Ditto |
| 5 | 60 | 210 | 0.10 | 0.15 | 80 | Ditto |
| 6 | 70 | 200 | 0.05 | 0.15 | 80 | Ditto |
| 7 | 70 | 200 | Through hole | 0.20 | 70 | Comparative Example |
| 8 | 65 | 110 | 0.10 | 0.03 | 70 | Ditto |
| 9 | 60 | 175 | Through hole | 0.20 | 80 | Ditto |
| 10 | No evaluation can be made due to the melt of core member during brazing | | | | | Ditto |
| 11 | 35 | 180 | Through hole | 0.20 | 20 | Ditto |
| 12 | 60 | 210 | 0.05 | Through hole | 120 | Ditto |
| 13 | 70 | 185 | 0.05 | 0.05 | 100 | Example |
| 14 | 70 | 210 | 0.05 | 0.15 | 40 | Ditto |
| 15 | 70 | 170 | 0.05 | 0.10 | 60 | Ditto |
| 16 | 70 | 180 | 0.05 | 0.05 | 80 | Ditto |
| 17 | 70 | 150 | 0.10 | 0.05 | 70 | Comparative Example |
| 18 | No evaluation can be made due to the failure of cladding | | | | | Ditto |
| 19 | 40 | 180 | Through hole | Through hole | Unmeasurable | Ditto |
| 20 | 50 | 220 | Through hole | Through hole | Unmeasurable | Ditto |
| 21 | 80 | 160 | 0.20 | 0.15 | 130 | Comparative Example |
| 22 | 60 | 225 | 0.05 | 0.10 | 60 | Example |
| 23 | 75 | 200 | 0.06 | 0.04 | 90 | Comparative Example |

The composite material has a structure comprising: a core member(1) of an aluminum alloy, the content of Mg being restricted to 0.2 wt.% or less as an impurity, consisting essentially of 0.2 to 1.5 wt.% of Mn, 0.3 to 1.3 wt.% of Si, 0.02 to 0.3 wt.% of Ti, and, as required, 0.6 wt.% or less of Cu, 0.3 wt.% or less of Cr and 0.2 wt.% or less of Zr; an Al-Si filler member(3) clad on one surface of the core member; and a cladding member(2) of an aluminum alloy clad on the opposite side of said core member 1, consisting essentially of 0.3 to 3 wt.% of Mg and as required, 5 wt.% or less of Zn. The thickness of the core member(1) is preferably, 2.5 times or more greater than that of the filler member(3) falling within a range of 0.1 to 1 mm. With respect to a tube member for a radiator which is assembled by the brazing method with noncorrosive flux, the pitting potential of the core member (positive) is higher than that of the cladding member and is higher than that of the filler member, and the differences in pitting potential between the core member and the cladding member and between the core member and the filler member are 30 to 120 mV. With this, it is possible to obtain a tube member for a radiator which has excellent corrosion resistance for a long period of time.

## Claims

1. An aluminum alloy composite material for brazing comprising (in wt.-%):
a core member (1) made of an aluminum alloy consisting of 0.2 - 1.5 % Mn, 0.3 - 1.3 % Si, 0.02 - 0.3 % Ti, less than 0.1 % Mg,
optionally 0.1 % or less Cu, 0.3 % or less Cr, 0.2 % or less Zr,
the balance being Al and inevitable impurities;
an Al-Si filler member (3) clad on one surface of said core member; and
a cladding member (2) of an aluminum alloy clad on the opposite side of said core member, comprising 0.3 - 3 % Mg, and optionally 5 % or less Zn;
the composite material having total thickness of less than or equal to 0.3 mm.

2. An aluminum alloy composite material for brazing according to claim 1, wherein said optional Cu, Cr and Zr of said core member (1) and said optional Zn of said cladding member (2) are mandatorily contained therein, respectively.

3. An aluminum alloy composite material for brazing according to claim 1 or 2, wherein said core member (1) has a thickness of 2.5 times or more greater than that of said filler member (3) and falling within a range of 0.1 to 0.24 mm.

4. A tube member for a radiator in which said aluminum alloy composite material for brazing according to any of the claims 1 to 3 is welded into a tube with said filler member /4 outside, and said tube is fabricated into a radiator by brazing method with noncorrosive flux, wherein after brazing, said core member has a pitting potential (positive) higher than a pitting potential of said cladding member and higher than a pitting potential of said filler member, and the differences in pitting potential between said core member and said cladding member and between said core member and said filler member fall in the range of from 30 - 120 mV.

## Patentansprüche

1. Verbundmaterial aus Aluminiumlegierungen zum Hartlöten, umfassend (in Gewichtsprozent):
ein Kernbauteil (1), hergestellt aus einer Aluminiumlegierung, bestehend aus 0,2 - 1,5% Mn, 0,3 - 1,3% Si, 0,02 - 0,3% Ti, weniger als 0,1% Mg,
gegebenenfalls 0,1% oder weniger Cu, 0,3% oder weniger Cr, 0,2% oder weniger Zr,
Rest Al und unvermeidbare Verunreinigungen;
ein Al-Si-Füllmaterialbauteil (3), das auf eine Oberfläche des Kernbauteils plattiert ist, und
ein Plattierungsbauteil (2) aus einer Aluminiumlegierung, das auf die entgegengesetzte Seite des Kernbauteils plattiert ist, umfassend 0,3 - 3% Mg, und gegebenenfalls 5% oder weniger Zn;
wobei das Verbundmaterial eine Gesamtdicke von weniger oder gleich 0,3 mm hat.

2. Verbundmaterial aus Aluminiumlegierungen zum Hartlöten nach Anspruch 1, wobei das fakultative Cu, Cr und Zr des Kernbauteils (1) und das fakultative Zn des Plattierungsbauteils (2) jeweils obligatorisch darin enthalten sind.

3. Verbundmaterial aus Aluminiumlegierungen zum Hartlöten nach Anspruch 1 oder 2, wobei das Kernbauteil (1) eine 2,5-fach oder mehr größere Dicke als die des Füllmaterialbauteils (3) besitzt und innerhalb eines Bereichs von 0,1 bis 0,24 mm fällt.

4. Rohrenbauteil für einen Radiator, bei dem das Verbundmaterial aus Aluminiumlegierungen zum Hartlöten nach einem der Ansprüche 1 bis 3 in eine Röhre mit dem Füllmaterialbauteil an der Außenseite eingeschweißt wird, und die Röhre in einen Radiator durch das Hartlötverfahren mit nichtkorrodierendem Flußmittel verarbeitet wird, wobei das Kernbauteil nach dem Hartlöten ein Lochfraßpotential (positiv) hat, das höher ist als das Lochfraßpotential des Plattierungsbauteils und das höher ist als das Lochfraßpotential des Füllmaterialbauteils, und die Unterschiede im Lochfraßpotential zwischen dem Kernbauteil und dem Plattierungsbauteil und zwischen dem Kernbauteil und dem Füllmaterialbauteil in den Bereich von 30 - 120 mV fallen.

## Revendications

1. Matériau composite en alliage d'aluminium pour brasage comprenant (en % en poids) :
un élément central (1) fait d'un alliage d'aluminium constitué de 0,2 - 1,5 % de Mn, 0,3 - 1,3 % de Si, 0,02 - 0,3 % de Ti, moins de 0,1 % de Mg,
éventuellement 0,1 % ou moins de Cu, 0,3 % ou moins de Cr, 0,2 % ou moins de Zr,
le complément étant Al et des impuretés inévitables;
un élément de remplissage (3) en Al-Si plaqué sur une surface dudit élément central; et
un élément de placage (2) d'un alliage d'aluminium plaqué sur la face opposée dudit élément central, comprenant 0,3 - 3 % de Mg, et éventuellement 5 % ou moins de Zn;
le matériau composite ayant une épaisseur totale inférieure ou égale à 0,3 mm.

2. Matériau composite en alliage d'aluminium pour brasage selon la revendication 1, dans lequel ledit Cu, Cr et Zr éventuel dudit élément central (1) et ledit Zn éventuel dudit élément plaqué (2) sont respectivement obligatoirement contenu dans celui-ci.

3. Matériau composite en alliage d'aluminium pour brasage selon la revendication 1 ou 2, dans lequel ledit élément central (1) a une épaisseur de au moins 2,5 fois supérieure à celle dudit élément de remplissage (3) et comprise dans l'intervalle de 0,1 à 0,24 mm.

4. Elément tubulaire pour un radiateur dans lequel ledit matériau composite en alliage d'aluminium pour brasage selon l'une quelconque des revendications 1 à 3 est soudé en un tube avec ledit élément de remplissage à l'extérieur, et ledit tube est usiné en radiateur par un procédé de brasage avec flux non corrosif, dans lequel après le brasage, ledit élément central a un potentiel (positif) de piquage supérieur au potentiel de piquage dudit élément placé et supérieur au potentiel de piquage dudit élément de remplissage, et les différences de potentiel de piquage entre ledit élément central et ledit élément plaqué et entre ledit élément central et ledit élément de remplissage sont dans l'intervalle de 30 --120 mV.
